# EUROPEAN PATENT APPLICATION

(11) **EP 4 403 811 A1**
(43) Date of publication of application: **24.07.2024**
(21) Application number: 23020019.8
(22) Date of filing: 17.01.2023
(51) Int. Cl.: F16K 31/126, F16K 41/04, F16K 49/00

(54) **COMPACT VALVE FOR CRYOGENIC MEDIA WITH CONDITIONING SYSTEM**

(71) Applicant: Linde GmbH, 82049 Pullach (DE)
(72) Inventor: Berghoff, Rudolf, 82049 Pullach (DE)
(74) Representative: Reuß, Stephanie

(57) **Abstract**

Described is a cryogenic valve comprising a first chamber (3) with an orifice (2), second chamber (4), a housing (9) with a third chamber (5) and a fourth chamber (6), and a plunger (1) extending in an axial direction from the first chamber through the second chamber to or into the third chamber wherein the plunger is movable in the axial direction in order to open or close the orifice
and a method to use this cryogenic valve.

## Description

The present disclosure relates to a cryogenic valve comprising a first chamber through which a cryogenic fluid can be released to an adjacent recipient through an orifice, a second chamber, a housing with two chambers and a plunger which is connecting all chambers inside the cryogenic valve whereas the plunger can move along the first, second and third chamber.

Cryogenic valves or nozzles are already known from EP1440263A1, EP1522775A1 or EP1522779A1. Such valves are known in various forms and also called injection nozzles. With such valves, cryogenic fluids such as cryogenic liquids or cryogenic gases, such as for example liquid nitrogen (LIN) or liquid carbon dioxide (LIC) can be injected into adjacent recipients. The cryogenic fluid of typical temperatures between - 70°C to -200°C is preferably injected from the bottom, so these kinds of valves are also called bottom injection valves. These highly specialized cryogenic valves require special considerations for design, installation, operation, sanitation and maintenance due to the extreme and challenging operating conditions they face in a food and beverage production environment.

Recipients that these cryogenic valves are installed and operated on are for example machines in the food or beverage industry. They are preferably used for bottom injection of cryogenic fluids into processing vessels, such as mixers, blenders, grinders, cooking bowls, kettles, augers, cutters, choppers, separators, or other machines.

The products/materials to be cooled have mostly a pasty-like texture like ground meat, marinated meat, animal or plant-based proteins, potato-, chestnut- or other purees, cheese, marinades, or nearly liquid consistency like soups, sauces or even water, but also solid textures like flour, fat or powders are possible.

Such cryogenic valves have often a plunger or valve needle connected to a pneumatic or solid piston actuator for instance by way of a lever. The prior art designs provide spatial separation of the actuator system and significant distance from the valve chamber containing the cryogenic fluid so that cold transfer is reduced from the cryogenic valve chamber to the actuator components. This reduces wear effects as a result of thermal tensions in the cryogenic valve components, but at the same time requires more space, additional components and related expense and complexity. A lever arm also creates bending moments on the plunger from the lever, which increases mechanical stress, potential for misalignment and sticking and leads to reduced safety and reliability, shorter useful life and potential mechanical failure of the plunger or valve needle inside the valve. The other disadvantage of the cited prior art is the typical side-by-side arrangement requiring extra footprint and space on the said recipient or machine, even though the available space for valve installation is severely limited already.

In previous designs, the lever is also often connected with a spring to enable a fail-closed design for the cryogenic valve. The spring is typically fastened to the lever on the opposite side of the actuator. The cryogen injection chamber of the valve, the pneumatic cylinder and the linkage - and optionally the spring - are typically arranged standing side-by-side and are jointly applied to the lever. This side-by-side standing arrangement of the elements requires further space and footprint for the cryogenic valve installation. The separate and exposed return spring also creates the potential for corrosion and mechanical failure of the spring due to the various common cleaning and sanitation chemicals and water used frequently in food and beverage production facilities.

To overcome the friction to move these kinds of plungers in cryogenic valves it requires higher forces, so there is less force available from the actuator to close and seal the orifice.

Furthermore, the plunger or stem of such described valves for cryogenic fluids can be blocked because water at the plunger condenses and/or freezes and gets the plunger stuck or renders it more difficult to move as needed for safe and proper operation of the injection valve. These blockings or hindrance of movement occur frequently closer to the back end of the valve, near the actuator.

This is a risk for people working in the area around the machine, because, if an upstream valve is closed, too, the pressure can become too high due to the boiling of the trapped cryogenic liquid and/or a cryogen leakage can occur. Furthermore, there is a risk, that the valve, the connected machinery, the surroundings, or the whole system can get damaged or broken if overchilled. Another risk is, if the plunger gets stuck in the partially or fully open position, cryogenic fluid releases in uncontrolled fashion into the recipient and the facility around it. This creates a risk of asphyxiation for people in the area. In addition, if the plunger gets stuck in the open position or does not close the injection orifice completely, and there is no flow of cryogenic fluid anymore, the material to be cooled can enter the valve and damage it. A lot of effort would be necessary to clean the valves, especially because there are very high hygienic demands in the food and beverage industry to maintain sanitary conditions to avoid bacterial contamination of foodstuffs being cooled by the direct injection of cryogenic liquids using cryogenic valves installed on a recipient machine.

The most probable reason for building ice crystals, which lead to the freezing or sticking of the plunger in this area of the valve is, that there is a significant temperature difference (typically a minimum difference of 70°C and up to in excess of 200°C) on the plunger connecting all the chambers of the cryogenic valve subject to this invention. On one end, the plunger is cooled down to very low temperatures due to the cryogenic fluid, which is injected into the device or recipient, and also contacting the plunger at the front end of the valve. The back end of the plunger, near the actuator, is not cooled by the cryogenic fluid and therefore has a higher, mostly ambient, temperature and it is surrounded by and exposed to the warmer and humid ambient environment in the facility housing the recipient machine or vessel. The ambient temperature in a meat processing facility is typically between 2 and 10 °C, and higher in other facilities depending on the food being processed. The surrounding air is typically humid with significant moisture content, often saturated. Because of this temperature difference and surrounding conditions there is a shrinkage in the material due to the cool down and cold transmission across and along the plunger from the front end to the back end of the valve. Cold is also transferred through the housing. The shrinkage is another reason for increased friction between the plunger, the sealing package and the housing.

Another third reason is, that some water/moisture from the surrounding environment can get into the gaps between the plunger and the valve housing, especially at the back end of the valve, due to condensation or cleaning and sanitation. This water or moisture can freeze during the cool down of the valve and can build ice crystals or even ice blocks around the plunger. This can block the plunger as well which was experienced using prior art cryogenic valves.

This happens frequently during the cooling down of this area, which is especially the case, when the cold plunger is pulled backwards during opening the valve.

By opening the valve, the plunger is pulled backwards and more of the cold part is pulled into the back end of the valve. The plunger can now be blocked in its open position and the valve can be difficult to close, partially closed or not be closed at all anymore, and thus creating a serious personal safety, sanitation and/or operational issue for the machine operator.

So the task is to overcome the above mentioned disadvantages of previous known cryogenic valves.

To avoid these problems, the following cryogenic valve and a method to operate the valve is disclosed.

Disclosed is a cryogenic valve comprising a first chamber with an orifice, a second chamber, a housing with a third chamber and a fourth chamber and a plunger extending in axial direction from the first chamber through the second chamber to or into the third chamber. It is designed in such way that the third and the fourth chambers are separated by a membrane plate unit and that the plunger is mounted to the membrane plate unit.

The second chamber can also be described as as a labyrinth of bore holes, ring channels, gaps or opening spaces. One gab is formed e.g. between the plunger and a valve housing.

The orifice is preferably connected to an adjacent recipient which can be for example a processing vessel or a pipeline.

With such a membrane plate unit, also called diaphragm actuator, instead of a state of the art piston actuator, the friction to move the connected plunger is reduced, therefore less force is necessary. The membrane plate unit consists of at least one flexible membrane, which is impermeable to gases and liquids and preferably made out of rubber and/or polymer. Additionally, the membrane plate unit contains at least one metal plate, for stabilizing the flexible membrane.

An additional advantage is that such a membrane plate unit has a bigger diameter in relation to the plunger. Therefore, at the same actuation pressure, a bigger force can act on the plunger as compared to the usage of a smaller actuator.

In a preferred embodiment, the cryogenic valve has in its second chamber an inlet for a service fluid. This service fluid is used to purge, or in other word condition the cryogenic valve or one or more of its key components. Purging or conditioning means that the service fluid can be used for either cooling, heating, drying or a combination thereof.

According to certain embodiments the second chamber is directly adjoining a sealing package. This sealing package or chamber avoids that any cryogenic fluid from the first chamber is flowing along the plunger into the second chamber.

According to certain embodiments, the second chamber has an opening to release the service fluid. In another preferred embodiment, the opening to release the service fluid out of the second chamber has a seal, which preferably opens when the service fluid pressure has reached 0,2- 3 bar or more preferably about 0,6 bar.

The seal can be as well designed as a check valve.

According to certain embodiments, there is at least one spring within the fourth chamber between the housing and the membrane plate unit. The function of this spring is to support the closing of the valve, especially in emergency situations (for example the valve to fail closed for safety). It can be one spring, but also more springs are thinkable. Preferably, there are 3 doublesprings. Furthermore the at least one spring can support the movement of the plunger to stop cool down of the firstchamber when the third chamber releases and the fourth chamber gets a positive pressure.

The second chamber could get a short pulse of a higher pressure, when the fluid flow through first chamber is supposed to start. This short pulse is preferably a short pressure pulse between 2 - 5 bars and between 10 - 1000 ms (milliseconds). The effect of this short gas pulse is, that the second chamber is blown out and cleaned.

According to certain embodiments there is a sealing package surrounding the plunger and separating the first and the second chamber. Preferably the second chamber is direct adjoining the sealing package at the opposite direction to the first chamber.

According to certain embodiments, the inlet for the service fluid is designed for a service fluid, which is able to reduce, eliminate or absorb humidity and/or liquid water. In another possible embodiment, the inlet for the service fluid is designed for a fluid, which is able to provide thermal energy to the second chamber, the plunger, the sealing package and its surrounding material.

This service fluid is preferably a gas, more preferably dry air, nitrogen or carbon dioxide. The temperature of the service fluid is preferably between 10 °C to 90 °C and more preferabaly between 25°C to 90°C. Preferably the service fluid purging the second chamber has a pressure from 0,4- 3 bar, more preferably about 1,2 bar. Preferably the service fluid purging the second chamber has a flow rate of 5-200 l/min (standard liter/min at 0°C).

In a further preferred embodiment, the warm gas, used for purging the second chamber is the same kind as the cryogenic fluid, e.g if the cryogenic fluid is liquid nitrogen it is preferred to use nitrogen as purging gas for the second chamber. This increases the efficency and avoids contamination.

The purging or in other words conditioning means, that depending on the circumstances (temperature and humidity), the plunger is either heated, chilled, or just dried. The conditioning of the plunger in the second chamber, to retain a free movement of the plunger, is usually started nearly in parallel to an open or closing process of the valve. Preferably the conditioning or purging starts shortly before the plunger is moved. More preferably the second chamber should continuously be purged as long the valve is in its "open" state, to avoid any malfunction during the closing of the valve. Additionally, in its "open" state, the first chamber and therefore the plunger are cooled down by the flowing cryogenic fluid and therefore the risk that plunger sticks or gets completely stuck is highest.

Disclosed is further a method to supply a cryogenic fluid with a cryogenic valve to an adjacent recipient through an orifice, whereas the orifice is opened in such way, that the plunger is moved along to its longitudinal axis by increasing a pressure in the third chamber so that the membrane plate unit is moved towards the fourth chamber and the orifice is opened.

The volume of the housing containing the third and fourth chambers is constant, so if the membrane plate unit is moved by increasing the pressure either in the third or fourth chamber the volume of the respective volume becomes bigger and the volume of the other chamber becomes smaller.

One advantage is, that due to the servicing and conditioning of the second chamber with e.g. a warm gas, the plunger can not stick, or get stuck or get blocked anymore due to freezing. This happens because if warm gas is used, it prevents moisture condensation, and subsequent ice build up and pushes water or moisture out of the second chamber critical for proper cryogenic valve operation. Therefore, the safety risk for people working with these machines or the risk of losing either cryogenic fluid or damaging or contaminating the machine with the material to be cooled can be reduced. Therefore, there are significantly reduced risks and interruptions of the production and therefore a higher acceptance of the valve in the market.

To maintain sanitary conditions many prior art cryogenic valves require frequent (often daily) disassembly, cleaning and sanitation, requiring significant labor and effort. The cryogenic valve subject to this disclosure does not require any disassembly, special sanitation and cleaning because of its inherent design not to allow any foodstuffs to back flow into the valve chambers, and the special plunger and related service fluid conditioning system ensuring the cryogenic valve is always closed as intended in normal operation, and furthermore even during an emergency situation requiring the valve to fail closed.

Additionally, the lifetime of the equipment and all its components are increased.

The detailed embodiments are now described according to figure 1 - 3 and with specific examples.
Fig 1: a schematic drawing of an open cryogenic valve
Fig 2: a schematic drawing of an open cryogenic valve with an inlet for a service fluid
Fig 3: a schematic drawing of an open cryogenic valve with a sealing of the second chamber

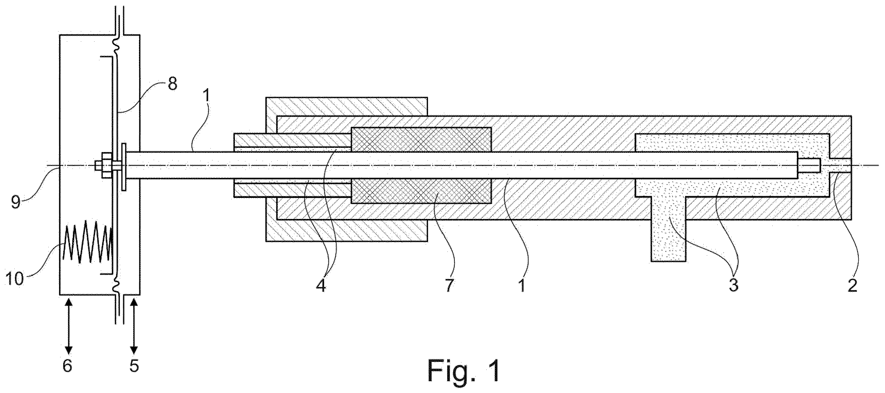

Figure 1 shows a specific example of a described cryogenic valve installed on a recipient or machine not shown. The valve has a plunger 1. The plunger has preferably a cylindrical form, but can have a different cross section as well. The plunger can close and open an orifice 2. Through this orifice 2 a cryogenic fluid is usually supplied via a first chamber 3 to an adjacent recipient or machine, which is not shown. What is also not shown are means to install and adjust the valve to the recipient vessel. Such techniques are known from prior art.

The plunger 1 is furthermore surrounded by sealing package 7, which makes sure, that no cryogenic fluid supplied to the first chamber 3 can move along the plunger 1 into the second chamber 4. This second chamber 4 is formed around by a cover and the plunger 1 and is usually open towards the surrounding environment. Furthermore, the end of the plunger 1 is connected to an actuator unit. This actuator unit consists of a housing 9 and this housing 9 is divided into a third chamber 5 and fourth chamber 6 by a membrane plate unit 8. The plunger 1 is mounted on the membrane plate unit 8. So, the plunger is guided through the first, second and third chamber (3, 4, 5) as well as through the sealing package 7. The shown valve has also a spring 10, which is placed in the fourth chamber 6 between the housing top and the membrane plate unit 8. Plunger 1 is moved to open or close orifice 2 by increasing or decreasing the pressure in the third or respectively the fourth chamber (5, 6).

If the pressure in the fourth chamber 6 is increased by supplying a gas or liquid, for example pressurized air, nitrogen, oxygen, carbon dioxide or a mixture thereof, and in the same time the pressure in the third chamber 5 is reduced the membrane plate moves towards the direction of the orifice and plunger is moved along its longitudinal axis to close the orifice 2. If there are any technical defects in the supply of the pressure or an emergency shut off is necessary, the spring 10 can support the movement of the membrane plate unit 8 to close the orifice 2 by moving the plunger 1. If the pressure in the fourth chamber 6 is relaxed and the pressure in the third chamber 5 is increased, preferably by using the same gas as selected above, the membrane plate unit 8 is moved backwards, away from the orifice 2 and the spring 10 is pressed together. In parallel the plunger 1 moves along its longitudinal axis back away from orifice 2 to open the orifice 2.

The cryogenic fluid which is supplied via the first chamber 3 and the orifice 2 to the recipient is usually liquid nitrogen or liquid carbon dioxide. As long as there is cryogenic fluid within the first chamber 3, the plunger is cooled down in this area. There is a heat transfer from this cold area, via the plunger 1 and the cover towards the end of the cryogenic valve.

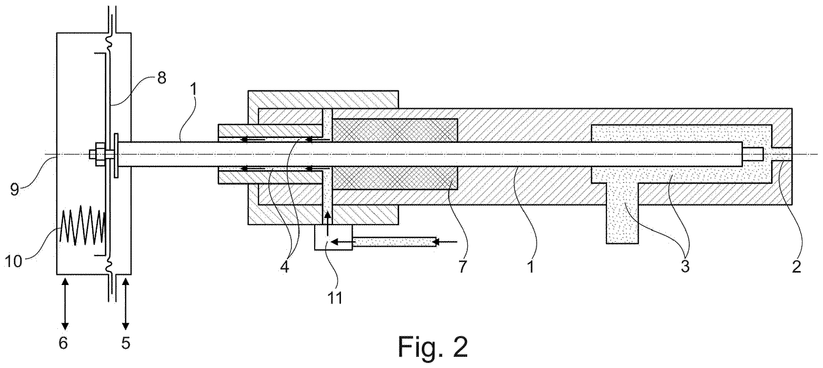

Figure 2 shows another specific example of a described cryogenic valve. This valve contains the same components as described already for the embodiment of Figure 1. Additionally, there is an inlet 11 connected to the second chamber 4. This inlet is used to introduce a service fluid into the second chamber 4. Usually dry air, nitrogen or carbon dioxide with a temperature preferably from 25 °C to 90°C is used. The service fluid in this example is conditioning and/or purging the second chamber 4 with a pressure of 1,2 bar. For this the service fluid conditioning and/or purging the second chamber 4 has a flow rate of 5 -200 l/min. A preferred condition is a flow rate of 11 l/min at a temperature of 55 °C.

The purging of the second chamber to avoid the blocking or sticking of the plunger 1 within the second chamber 4. By purging or conditioning the second chamber 4 and the plunger 1, it can be avoided that water condensation occurs or ice crystals are formed or compensate the shrinking of the material of the plunger and/or the cover.

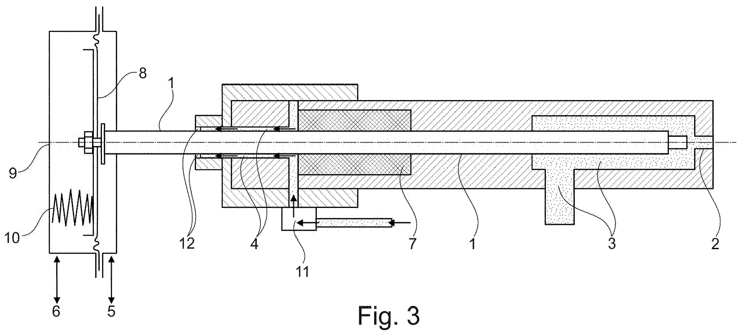

Figure 3 shows another specific example of a described cryogenic valve. This valve contains the same components as described already for the embodiment of Figures 1 and 2. In the presented example the second chamber 4 is not open to the atmosphere at its end towards the actuator unit. The second chamber 4 is sealed by a seal 12. This seal 12 avoids on the one hand that during and after purging or conditioning of the second chamber 4, moisture can enter the second chamber 4. On the other hand that, especially if the second chamber 4 is heated too much heat is lost.

In further embodiments, it is thinkable that the conditioning and purging work also for other valves with a plunger, working at low temperatures. An electrical heater could be installed as well, to avoid freezing, but still moisture would be able to enter the second chamber. The use of a service fluid also creates an additional active and controllable thermal barrier between the different chambers of the cryogenic valve, whereas the multiple chambers are all interconnected by the same plunger. The plunger 1 can also be created from multiple interconnecting sections with different thermal conduction properties to minimize cold migration to undesirable sections of the cryogenic valve.

In further embodiments it is also thinkable that only either the third or the fourth chamber, has an inlet for a gas. So the movement of the membrane plate unit is handled by increasing or respectively decreasing the pressure in only in one of the chambers. In a further embodiment, there can be an additional spring or a plurality of springs in preferably the fourth chamber to support the membrane plate unit movement.

## Claims

1. A cryogenic valve comprising
- a first chamber (3) with an orifice (2),
- a second chamber (4),
- a housing (9) with a third chamber (5) and a fourth chamber (6),
- and a plunger (1) extending in an axial direction from the first chamber through the second chamber to or into the third chamber wherein the plunger is movable in the axial direction in order to open or close the orifice,
**characterized in that**
the third chamber (5) and the fourth chamber (6), are separated by a membrane plate unit (8) and that the plunger (1) is mounted to the membrane plate unit.

2. A cryogenic valve of claim 1, **characterized in that** the second chamber (4) has an inlet (11) for a service fluid.

3. A cryogenic valve of at least one of the preceeding claims, **characterized in that** the second chamber (4) is directly adjoining a sealing package (7).

4. A cryogenic valve of at least one of the preceeding claims 2-3, **characterized in that** the second chamber (4) has an opening to release the service fluid.

5. A cryogenic valve of at least one of the preceeding claims 2-4, **characterized in that** the opening to release the service fluid out of the second chamber (4) has a seal (12), which preferably opens when the service fluid pressure has reached 0,2- 3 bar or more preferably 0,6 bar.

6. A cryogenic valve of at least one of the preceeding claims, **characterized in that** there is at least one spring (10) within the fourth chamber (6) between the housing (9) and the membrane plate unit (8).

7. A cryogenic valve of at least one of the preceeding claims, **characterized in that** there is a sealing package (7) surrounding the plunger (1) and separating the first (3) and the second chamber (4).

8. A cryogenic valve of at least one of the preceeding claims 2-7, **characterized in that** the inlet (11) for the service fluid is designed for a service fluid, which is able to reduce, eliminate or absorb humidity and/or liquid water.

9. A cryogenic valve of at least one of the preceeding claims 2-8, **characterized in that** the inlet (11) for the service fluid is designed for a fluid, which is able to provide thermal energy to the second chamber (4), the plunger (1), the sealing package (7) and its surrounding material.

10. A cryogenic valve of at least one of the preceeding claims, **characterized in that** the third (5) and the fourth chamber (6) comprise each an inlet for a gas which is preferably pressurized air, nitrogen, oxygen, carbon dioxide or a mixture thereof.

11. A method to supply a cryogenic fluid with a cryogenic valve according to at least one preceeding claims to an adjacent recipient through an orifice (2), **characterized in that** the orifice (2) is opened in such way, that the plunger (1) is moved along its longitudinal axis by increasing a pressure in the third chamber (5) so that the membrane plate unit (8) is moved towards the fourth chamber (6) and the orifice (2) is opened.

12. A method to supply a cryogenic fluid with a cryogenic valve according to at least one preceeding claim to an adjacent recipient through an orifice, whereas the second chamber (4) is purged by a service fluid, preferably dry air, nitrogen or carbon dioxide.

13. A method according to claim 12, **characterized in that** the service fluid purging the second chamber (4) has a temperature between 10 °C to 90°C, more preferably from 25 °C to 80°C.

14. A method according to claim 12 or 13, **characterized in that** the service fluid purging the second chamber (4) has a pressure from 0,4- 3 bar, preferably 1,2 bar.

15. A method according to at least one of the claims 12 to 15, **characterized in that** the service fluid purging the second chamber (4) has a flow rate of 5 to 200 l/min.
